# EUROPEAN PATENT SPECIFICATION

(11) **EP 2 072 388 B1**
(45) Date of publication and mention of the grant of the patent: **01.07.2015**
(21) Application number: 08253815.8
(22) Date of filing: 26.11.2008
(51) Int. Cl.: B62K 9/00, B62B 3/00

(54) **Ride-on toy having movable footrest**
Spielzeug zum Fahren mit beweglicher Fußstütze
Trotteuse dotée d'un repose-pied amovible

(30) Priority: 13.12.2007 US 955596
(43) Date of publication of application: 24.06.2009
(73) Proprietor: RADIO FLYER INC., Chicago, IL 60707 (US)
(72) Inventor: Schlegel, Thomas, Wheaton, IL 60187-2033 (US); Seckel, Timothy, Streamwood, IL 60107-2234 (US)
(74) Representative: Dauncey, Mark Peter

(56) References cited:
- EP-A1- 1 308 381
- US-A- 1 662 292
- US-A- 3 173 396
- US-A- 4 626 030
- US-A- 5 944 338

## Description

### BACKGROUND

The present invention relates generally to ride-on toys for children, and more specifically to a movable footrest for use in conjunction with such ride-on toys.

Ride-on toys are available in a variety of configurations, including, but not limited to tricycles, bicycles, scooters, cars, and other toys. Ride-on toys generally have a plurality of wheels, and a seat for a child to occupy while utilizing the ride-on toy. Ride-on toys also generally have a steering wheel or handle bars for the child to grip, some types of which are functional for steering the ride-on toy, and some types of which are not. Ride-on toys can be propelled for locomotion in various ways, but are primarily propelled by a child via foot power. Foot power can be supplied, for example, through the use of pedals, or by direct contact of feet on a riding surface such as pavement or grass.

Documents US 1,662,292 A and EP 1 308 381 A1 disclose prior art ride-on toys.

### SUMMARY

Ride-on toys of the present invention preferably include a body having a plurality of wheels attached thereto, and a seat attached to the body. Generally, a child will occupy the seat while utilizing the ride-on toy. In preferred embodiments, ride-on toys of the present invention have an opening disposed within the body of the toy, through which a child's legs and feet can pass to contact a riding surface and propel the ride-on toy. Ride-on toys of the present invention preferably also include features that facilitate propulsion of the toy by a person standing outside of the body of the toy, such as, for example, an adult caregiver.

The ride-on toys of the present invention include a movable footrest. In preferred embodiments, the footrest slidably engages the body of the ride-on toy. It is also preferred that the movable footrest have an operation position and a stowed position. In such embodiments, it is preferred that the footrest have a stowed position that allows a child to operate the ride-on toy in a substantially unhindered manner: The child is able to use his or her legs and feet to propel the toy without banging into or kicking the footrest. In particularly preferred embodiments, the stowed position of the footrest is under the seat of the ride-on toy. In such embodiments, the footrest can be moved from its stowed position to its operation position by moving the footrest forward, towards the front of the ride-on toy, so that a child can sit on the seat and place his or her feet on or in the footrest. In this manner, a child can safely keep his or her feet off of the ground while another person propels the ride-on toy.

In at least some preferred embodiments, ride-on toys of the present invention also include at least one operating handle, which can be used by a person propelling the ride-on toy from outside of the body of the toy. Operating handles can be connected to the body, or can be integrally molded or shaped as parts of the body. The body of a ride-on toy generally includes a front portion and a rear portion. In embodiments having a single operating handle, it is preferred that the operating handle be located at the rear portion, to facilitate the ability of a person to stand behind the toy and push it forwards. It is particularly preferred that the operating handle be a telescoping handle having at least a retracted position and an extended position. In such embodiments, the operation handle can be extended for use by a person propelling the toy from outside of the toy, and can be retracted when not in use, such as when the child sitting on the toy is propelling the toy.

Accordingly, in at least one aspect, the present invention provides a children's ride-on toy comprising a body having a plurality of wheels attached thereto, a seat, and a footrest slidably engaging the body. In preferred embodiments, the body further includes a first guide rail and a second guide rail, and the footrest slidably engages the first and second guide rails. In some preferred embodiments, the footrest includes a bottom wall, a front end wall, a rear end wall, a first side wall, and a second side wall. In such embodiments, the side walls of the footrest slidably engage the body. For example, in at least one such embodiment, the first side wall includes an outer rim that defines a first guide rail channel, and the second side wall includes an outer rim that defines a second guide rail channel: The guide rail channels of the footrest can slidably engage the guide rails of the body.

### BRIEF DESCRIPTION OF THE DRAWINGS

Fig. 1 is a side elevational view of an embodiment of the ride-on toy of the invention with the footrest in the operational position;

Fig. 2 is a side elevational view of the ride-on toy of Fig. 1 with the footrest in the stowed position;

Fig. 3 is a top plan view of the ride-on toy of Fig. 2;

Fig. 4 is a bottom plan view the ride-on toy of Fig. 2;

Fig. 5 is an enlarged perspective view of the foot rest of the ride-on toy of Figs. 1-4;

Fig. 6 is a front elevational view of the footrest of Fig. 5; and

Fig. 7 is a sectional view of the ride-on toy of Figs. 1-4 taken along line 7-7 of Fig. 2.

### DETAILED DESCRIPTION OF EMBODIMENTS

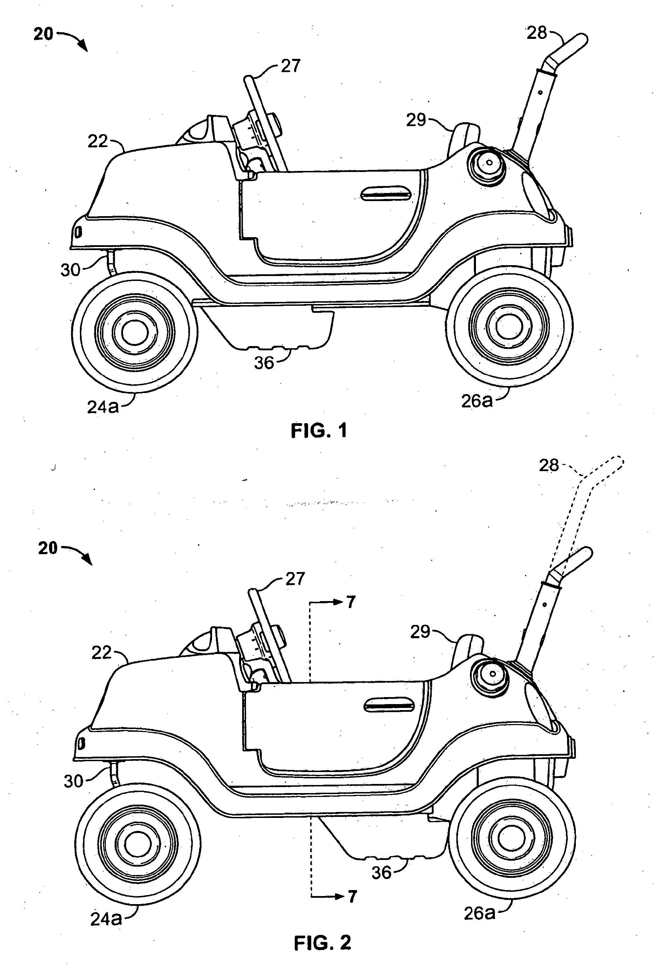

An embodiment of a ride-on toy of the present invention is indicated in general at 20 in Figs. 1-4. As illustrated in Figs. 1-4, the ride-on toy features a body 22, a pair of front wheels 24a and 24b and a pair of rear wheels 26a and 26b attached thereto. The ride-on toy 20 also has a steering wheel 27 and a seat 29 upon which a child may sit. As illustrated in Figs. 1-4, the body 22 of the ride-on toy is configured to look like a car. In other embodiments, the body can have any suitable configuration, such as, for example, a boat, an airplane, a spaceship or rocket, an animal, a motorcycle, a truck, a train, or any other configuration that may be attractive to children.

In addition, the ride-on toy 20 preferably features a telescoping operating handle 28 that is connected to a rear portion of the toy body, as illustrated in Figs. 1-4 in a retracted configuration. The operating handle 28 may be raised into the extended position illustrated in phantom in Fig. 2 for ease of access and pushing or pulling by a person other than the child riding the toy. In other embodiments, at least one operating handle can be located anywhere on the body of the ride-on toy, such as, for example, on the front portion of the ride-on toy, or on the side of the ride-on toy. Additionally, operating handles can be folding, retracting, fixed in length, or even removable. In still other embodiments of ride-on toys of the present invention, the ride-on toy does not have an operating handle. Instead, a person other than the child riding the toy can push or pull the ride-on toy by gripping a different portion of the body.

In the embodiment illustrated in Figs. 1-4, the front wheels 24 of the ride-on toy are preferably mounted to the front portion of the body by casters 30, and the operating handle 28 is not operatively connected to the front wheels. The casters, however, allow for the ride-on toy to be pushed and steered by directional forces applied to the operating handle 28. Additionally, the steering wheel 27, while it may be turned by the child, is also not operatively connected to the front wheels 24. A child operating the ride-on toy preferably steers the toy by exerting directional forces onto the riding surface with his or her feet. In other embodiments, either the operating handle or the steering wheel can be operatively connected to the front wheels.

A footrest 36, as explained in greater detail below, is also mounted to the body and may be slid between an operation position, illustrated in Fig. 1, and a stowed position, illustrated in Figs. 2-4. When the footrest 36 is in the operation position illustrated in Fig. 1, a child may sit on seat 29 and grip steering wheel 27, while having his or her feet positioned within footrest 36, or on at least some portion of footrest 36. This facilitates pushing of the toy by push extended operating handle 28 so that the toy operates in a manner similar to that of a stroller.

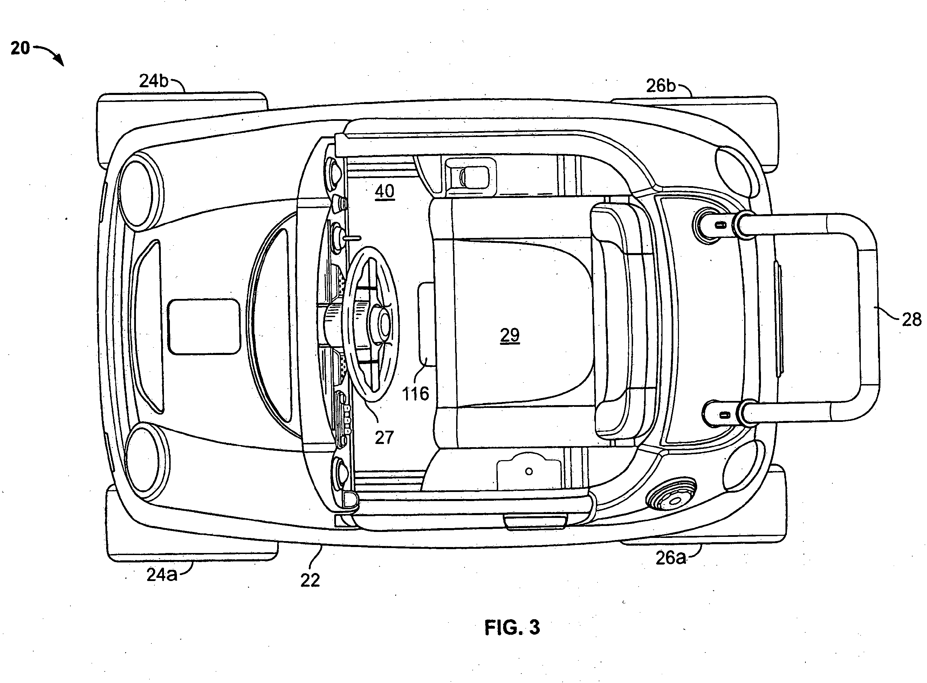

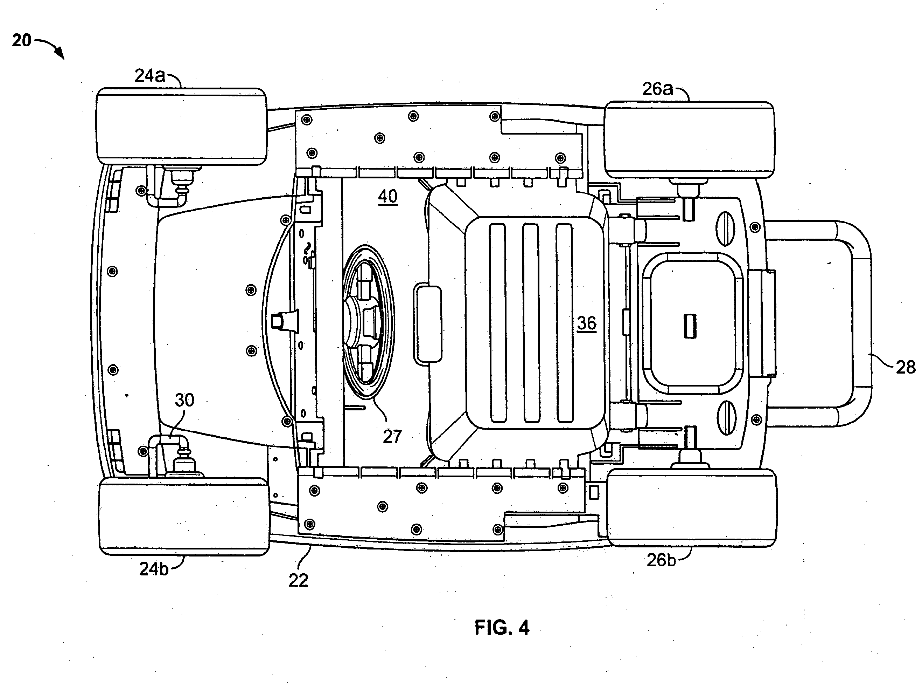

When the footrest 36 is in the stowed position under seat 29, as illustrated in Figs. 2-4, the child may position his or her legs through the resulting opening 40 (Figs. 3 and 4) so that the toy may be propelled by the child moving his or her feet along the surface, such as sidewalk or floor, upon which the toy is positioned. In such a configuration, the toy serves as a foot-to-floor riding toy.

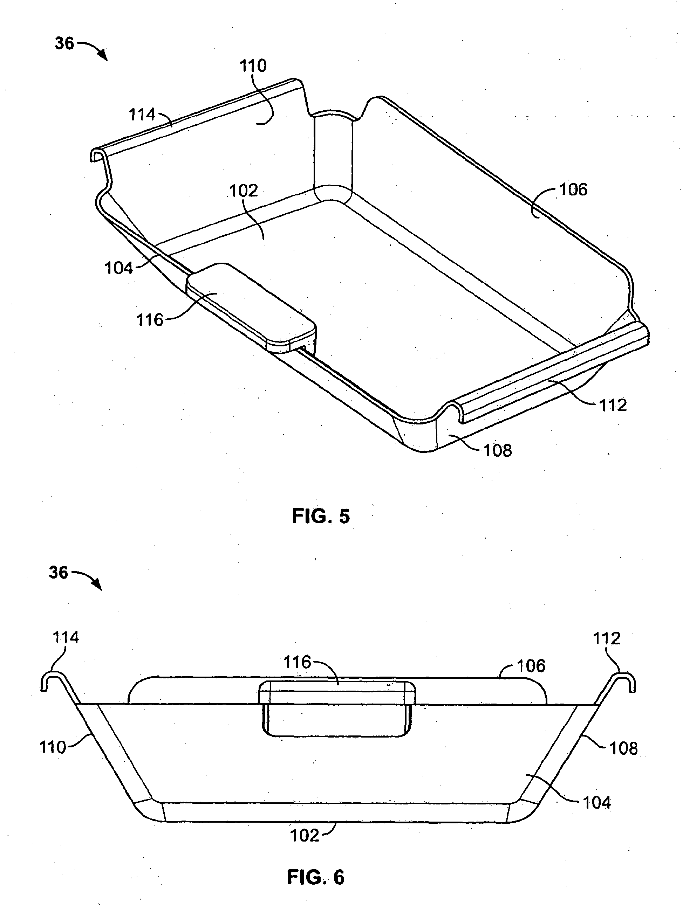

The movable footrest of the present invention can include any device that is suitable for use as a footrest, including but not limited to a tray, drawer or T-bar. In preferred embodiments, the footrest is a tray having at least a bottom wall, a first side wall, and a second side wall. More preferably, the footrest is such a tray that also has a front end wall and a rear end wall. For example, an enlarged view of a footrest is provided in Fig. 5, where it is indicated in general at 36. As illustrated in Fig. 5, the movable footrest 36 includes a bottom wall 102, a front end wall 104, a rear end wall 106, a first side wall 108, and a second side wall 110. Front end wall 104 preferably further includes a handle 116. Handle 116 is used to grip the footrest when moving it between its operation position (illustrated in Fig. 1) and its stowed position (illustrated in Figs. 2-4).

The first and second side walls 108 and 110 include outer rims 112 and 114, respectively. Outer rims 112 and 114 preferably extend above the height of both front end wall 104 and rear end wall 106, and are configured to slidably engage guide rails located on the body of a ride-on toy.

In the embodiment of the footrest 36 illustrated in Fig. 5, outer rim 112 is curved outwardly, away from first side wall 108, forming a first longitudinal channel for slidably engaging a first guide rail on the body of the ride-on toy. Similarly, outer rim 114 is curved outwardly, away from second side wall 110, forming a second longitudinal channel for slidably engaging a second guide rail on the body of the ride-on toy.

Fig. 6 is a front view of the movable footrest of Fig. 5, where it is also indicated in general at 36. As illustrated in Fig. 6, the curve of outer rims 112 and 114 preferably resembles an inverted "U." It should be understood, however, that the curve of outer rims 112 and 114 could have any cross section suitable for slidably engaging guide rails on the body of the ride-on toy, such as, for example, an inverted "V" or a square. Fig. 6 also illustrates that the side walls 110 and 108 are preferably angled such that the distance between them is greater at the top of the footrest than at the bottom thereof. Further, as illustrated in Fig. 4, the top edge of rear end wall 106 is preferably higher than the top edge of front end wall 104.

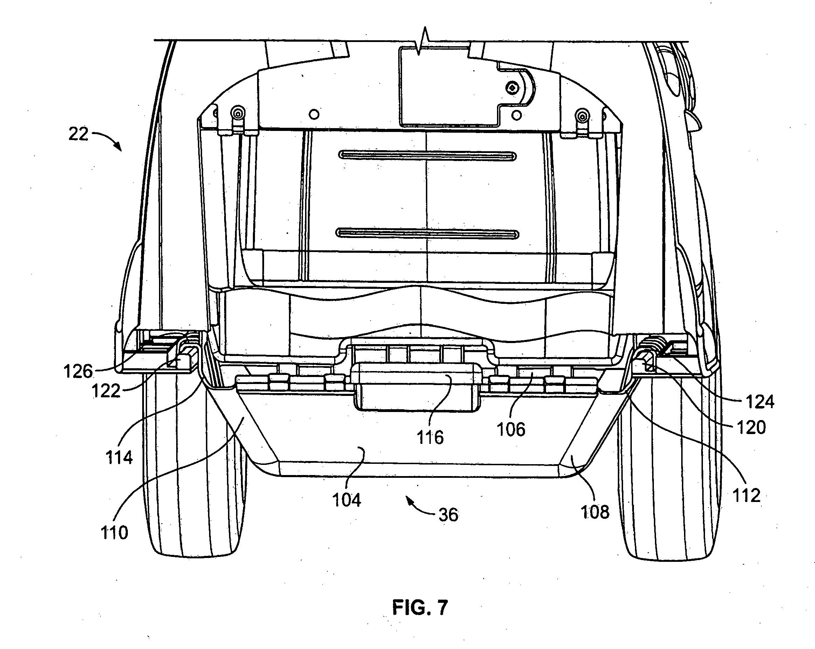

Fig. 7 is an enlarged sectional view of the ride-on toy of Figs. 1-4 taken along line 5-5 of Fig. 2. The body, indicated in general at 22, has a first guide rail 120 and a second guide rail 122. The footrest, indicated in general at 36, slidably engages the first and second guide rails 120 and 122. More specifically, as described previously, side wall 108 has an outer rim 112 that defines a first guide rail channel 124. Side wall 110 similarly has an outer rim 114 that defines a second guide rail channel 126. Guide rail channel 124 slidably engages guide rail 120 while guide rail channel 126 slidably engages guide rail 122. The guide rails can have any cross section suitable for slidably engaging the guide rail channels, and preferably have the same cross-section as the guide rail channels.

## Claims

1. A children's ride-on toy (20) comprising:
a) a body (22);
b) at least one front wheel (24a,24b) and at least one rear wheel (26a,26b) attached to said body (22);
c) said body (22) having a bottom opening (40) positioned between the at least one front wheel (24a,24b) and the at least one rear wheel (26a,26b);
d) a seat (29);
e) a footrest (36) including a bottom wall (102), a front end wall (104), a rear end wall (106) and first and second side walls (108, 110); and
f) said first and second side walls (108, 110) featuring outer rims (112, 114) having extended portions slidably engaging a first and second guide rail (120,122) on the body (22) so that the footrest (36) can slide horizontally between a stowed position underneath the seat (29) and an operation position where a child sitting in the seat (29) may position his or her feet within the footrest (36) or on at least some portion of the footrest (36).

2. The children's ride-on toy of claim 1, wherein the extended portion of the first side wall (108) comprises an outer (112) rim that defines a first guide rail channel (124) that engages the first guide rail (120) of the body (22), and the extended portion of the second side wall (110) comprises an outer rim (114) that defines a second guide rail channel (126) that engages the second guide rail (122) of the body (22).

3. The children's ride-on toy of claim 2 wherein the outer rims (112, 114) of the first and second side walls (108, 110) are generally inverted U-shaped.

4. The children's ride-on toy of claim 1, wherein the footrest (36) further comprises a handler (116) protruding forward from the front end wall (104).

5. The children's ride-on toy of claim 1, further comprising at least one operating handle (28) connected to the body (22) for gripping by a user.

6. The children's ride-on toy of claim 5, wherein the body (22) further comprises a front portion and a rear portion, and wherein the operating handle (28) is connected to the rear portion and is a telescoping handle so as to have at least a retracted position whereby a child can push the toy and an extended position whereby an adult or older child can push the toy.

7. The children's ride-on toy of claim 1 wherein the front end wall (104) of the footrest (36) connects the first and second sidewalls (108,110) and extends upwardly from the bottom wall (102) at an angle of around 45 degrees to the bottom wall (102).

## Patentansprüche

1. Spielzeug (20) zum Fahren für Kinder, das aufweist:
a) ein Hauptteil (22);
b) mindestens ein Vorderrad (24a, 24b) und mindestens ein Hinterrad (26a, 26b), die am Hauptteil (22) befestigt sind;
c) wobei das Hauptteil (22) eine Bodenöffnung (40) aufweist, die zwischen dem mindestens einem Vorderrad (24a, 24b) und dem mindestens einem Hinterrad (26a, 26b) positioniert ist;
d) einen Sitz (29);
e) eine Fußstütze (36) einschließlich einer unteren Wand (102), einer vorderen Endwand (104), einer hinteren Endwand (106) und einer ersten und zweiten Seitenwand (108, 110); und
f) wobei die erste und die zweite Seitenwand (108, 110) Außenränder (112, 114) kennzeichnen, die verlängerte Abschnitte aufweisen, die verschiebbar mit einer ersten und zweiten Führungsschiene (120, 122) am Hauptteil (22) in Eingriff kommen, so dass sich die Fußstütze (36) horizontal zwischen einer Verstauposition unterhalb des Sitzes (29) und einer Betriebsposition verschieben kann, wo ein im Sitz (29) sitzendes Kind seine Füße innerhalb der Fußstütze (36) oder auf mindestens einem bestimmten Abschnitt der Fußstütze (36) positionieren kann.

2. Spielzeug zum Fahren für Kinder nach Anspruch 1, bei dem der verlängerte Abschnitt der ersten Seitenwand (108) einen Außenrand (112) aufweist, der einen ersten Führungsschienenkanal (124) definiert, der mit der ersten Führungsschiene (120) des Hauptteils (22) in Eingriff kommt, und bei dem der verlängerte Abschnitt der zweiten Seitenwand (110) einen Außenrand (114) aufweist, der einen zweiten Führungsschienenkanal (126) definiert, der mit der zweiten Führungsschiene (122) des Hauptteils (22) in Eingriff kommt.

3. Spielzeug zum Fahren für Kinder nach Anspruch 2, bei dem die Außenränder (112, 114) der ersten und der zweiten Seitenwand (108, 110) im Allgemeinen umgekehrt U-förmig sind.

4. Spielzeug zum Fahren für Kinder nach Anspruch 1, bei dem die Fußstütze (36) außerdem einen Griff (116) aufweist, der nach vorn aus der vorderen Endwand (104) vorsteht.

5. Spielzeug zum Fahren für Kinder nach Anspruch 1, das außerdem mindestens einen Bedienungsgriff (28) aufweist, der mit dem Hauptteil (22) für das Ergreifen durch einen Benutzer verbunden ist.

6. Spielzeug zum Fahren für Kinder nach Anspruch 5, bei dem der Hauptteil (22) außerdem einen vorderen Abschnitt und einen hinteren Abschnitt aufweist, und bei dem der Bedienungsgriff (28) mit dem hinteren Abschnitt verbunden und ein Teleskopgriff ist, um so mindestens eine zurückgezogene Position, in der ein Kind das Spielzeug schieben kann, und eine ausgezogene Position zu erhalten, in der ein Erwachsener oder ein älteres Kind das Spielzeug schieben kann.

7. Spielzeug zum Fahren für Kinder nach Anspruch 1, bei dem die vordere Endwand (104) der Fußstütze (36) die erste und zweite Seitenwand (108, 110) verbindet und sich nach oben von der unteren Wand (102) aus unter einem Winkel von etwa 45 Grad zur unteren Wand (102) erstreckt.

## Revendications

1. Trotteur (20) pour enfant comprenant :
a) un corps (22) ;
b) au moins une roue avant (24a, 24b) et au moins une roue arrière (26a, 26b) fixées audit corps (22) ;
c) ledit corps (22) présentant une ouverture de fond (40) positionnée entre la au moins une roue avant (24a, 24b) et la au moins une roue arrière (26a, 26b) ;
d) un siège (29) ;
e) un repose-pied (36) comprenant une paroi de fond (102), une paroi d'extrémité avant (104), une paroi d'extrémité arrière (106) et des première et seconde parois latérales (108, 110) ; et
f) lesdites première et seconde parois latérales (108, 110) présentant des rebords extérieurs (112, 114) présentant des parties étendues mises en prise de manière coulissante avec des premier et second rails de guidage (120, 122) sur le corps (22) de telle manière que le repose-pied (36) peut coulisser de manière horizontale entre une position repliée sous le siège (29) et une position de fonctionnement dans laquelle un enfant assis sur le siège (29) peut positionner ses pieds dans le repose-pied (36) ou sur au moins une certaine partie du repose-pied (36).

2. Trotteur pour enfant selon la revendication 1, dans laquelle la partie étendue de la première paroi latérale (108) comprend un rebord extérieur (112) qui définit un premier canal de rail de guidage (124) qui est en prise avec le premier rail de guidage (120) du corps (22), et la partie étendue de la seconde paroi latérale (110) comprend un rebord extérieur (114) qui définit un second canal de rail de guidage (126) qui est en prise avec le second rail de guidage (122) du corps (22).

3. Trotteur pour enfant selon la revendication 2, dans laquelle les rebords extérieurs (112, 114) des première et seconde parois latérales (108, 110) sont essentiellement en forme de U inversé.

4. Trotteur pour enfant selon la revendication 1, dans laquelle le repose-pied (36) comprend en outre une poignée (116) faisant saillie vers l'avant à partir de la paroi d'extrémité avant (104).

5. Trotteur pour enfant selon la revendication 1, comprenant en outre au moins une poignée de manoeuvre (28) raccordée au corps (22) en vue d'une préhension par un utilisateur.

6. Trotteur pour enfant selon la revendication 5, dans laquelle le corps (22) comprend en outre une partie avant et une partie arrière, et dans laquelle la poignée de manoeuvre (28) est raccordée à la partie arrière et est une poignée télescopique de manière à présenter au moins une position rétractée dans laquelle un enfant peut pousser le jouet et une position étendue dans laquelle un adulte ou un enfant plus âgé peut pousser le jouet.

7. Trotteur pour enfant selon la revendication 1, dans laquelle la paroi d'extrémité avant (104) du repose-pied (36) raccorde les première et seconde parois latérales (108, 110) et s'étend vers le haut à partir de la paroi de fond (102) à un angle d'environ 45 degrés par rapport à la paroi de fond (102).
